(19) Europäisches Patentamt / European Patent Office / Office européen des brevets

(11) **EP 4 488 332 A1**

(12) **EUROPEAN PATENT APPLICATION**
published in accordance with Art. 153(4) EPC

(43) Date of publication:
**08.01.2025 Bulletin 2025/02**

(21) Application number: **23763367.2**

(22) Date of filing: **24.02.2023**

(51) International Patent Classification (IPC):
*C08L 67/00* [(2006.01)] *C08G 59/20* [(2006.01)]

(52) Cooperative Patent Classification (CPC):
**C08G 59/20; C08L 67/00**

(86) International application number:
**PCT/JP2023/006798**

(87) International publication number:
**WO 2023/167108 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022 JP 2022031900**

(71) Applicant: **TOYOBO MC Corporation Osaka 530-0001 (JP)**

(72) Inventors:
• **NAKASHIMA, Ayano**
**Otsu-shi, Shiga 520-0292 (JP)**
• **AKAISHI ,Takuya**
**Otsu-shi, Shiga 520-0292 (JP)**

(74) Representative: **Vossius & Partner Patentanwälte Rechtsanwälte mbB Siebertstrasse 3 81675 München (DE)**

(54) **THERMOPLASTIC POLYESTER ELASTOMER RESIN COMPOSITION AND MOLDED ARTICLE PRODUCED FROM SAME**

(57) The present invention is a thermoplastic polyester elastomer resin composition that achieves both flowability including excellent retention stability, and hydrolysis resistance, and has excellent mechanical characteristics. A thermoplastic polyester elastomer resin composition obtained through a reaction between a thermoplastic polyester elastomer (A) and an epoxy compound (B) that is liquid at 23°C, wherein the thermoplastic polyester elastomer resin composition has an acid value of 25 eq/ton or less and an epoxy value of 10 eq/ton or more, and wherein the epoxy value is greater than the acid value.

EP 4 488 332 A1

**Description**

Technical Field

The present invention relates to a thermoplastic polyester elastomer resin composition that achieves both excellent flowability and hydrolysis resistance, and has excellent mechanical characteristics. In detail, the present invention relates to a thermoplastic polyester elastomer resin composition that has excellent retention stability while maintaining flowability, and has good hydrolysis resistance and mechanical-physical properties.

Background Art

Thermoplastic polyester elastomers have particularly excellent heat resistance and oil resistance among thermoplastic elastomers, while having characteristics unique to elastomers, such as flexibility, rebound resilience, low-temperature characteristics, and bending fatigue ability. In addition, the thermoplastic polyester elastomers can be subjected to molding processes by various methods such as injection molding, extrusion molding, blow molding, and compression molding, and are therefore used in a wide range of uses such as a vehicle component and an electric or electronic component, and fibers, a sheet or film, and a bottle or container.

Not only the thermoplastic polyester elastomers, but also thermoplastic polyester resins have, due to the resin skeleton thereof, a characteristic of easily causing degradation by hydrolysis attributed to the influence of moisture. In order to cope with this characteristic, a method of blocking a terminal functional group (a carboxyl group and/or a hydroxyl group) of the polymer with a reactive additive is generally used as a means of improving the hydrolysis resistance.

For example, Patent Documents 1 and 2 each propose a thermoplastic polyester elastomer resin composition having blended therein an epoxy compound and a stabilizer with respect to a polyester block copolymer, wherein the epoxy compound has two or more functional groups that can be reacted with a terminal functional group of the copolymer, and wherein the stabilizer has a tertiary amine skeleton. This method can improve the suppression of volatiles during heating, the hydrolysis resistance, and the heat resistance, but is not sufficiently satisfying in terms of flowability and retention stability due to not controlling the amount of terminal functional groups in the resin composition, and the amount of unreacted epoxy contained in the composition.

Prior Art Documents

Patent Documents

Patent Document 1: Japanese Patent Application Laid-Open (JP-A) No. 2000-143950
Patent Document 2: Japanese Patent No. 3693152

Disclosure of the Invention

Problem that the Invention is to Solve

The present invention has been conceived of in view of the present circumstances of the conventional technique, and an object of the present invention is to provide a thermoplastic polyester elastomer resin composition that achieves both flowability including excellent retention stability, and hydrolysis resistance, and has excellent mechanical characteristics.

Means for Solving the Problem

In order to achieve the object, the inventor of the present invention has earnestly studied a thermoplastic polyester elastomer resin and a thermoplastic polyester elastomer resin composition that achieve all flowability, hydrolysis resistance, and mechanical characteristics, and, as a result, completed the present invention. In detail, it has been found that in a thermoplastic polyester elastomer resin composition obtained by reacting a thermoplastic polyester elastomer with an epoxy compound that is liquid in a 23°C atmosphere, by setting the acid value and the epoxy value (the amount of unreacted epoxy contained in the resin composition) of the resin composition to a specific range, a thermoplastic polyester elastomer resin composition can be obtained that has excellent retention stability while maintaining flowability, and has good hydrolysis resistance and mechanical-physical properties.

Thus, the present invention is as follows.

[1] A thermoplastic polyester elastomer resin composition obtained through a reaction between a thermoplastic polyester elastomer (A) and an epoxy compound (B) that is liquid at 23°C, wherein the thermoplastic polyester elastomer resin composition has an acid value of 25 eq/ton or less and an epoxy value of 10 eq/ton or more, and wherein the epoxy value is greater than the acid value.

[2] The thermoplastic polyester elastomer resin composition according to [1], wherein in the thermoplastic polyester elastomer resin composition, a part derived from the epoxy compound (B) that is liquid at 23°C is 0.5 to 6 parts by mass relative to 100 parts by mass of a part derived from the thermoplastic polyester elastomer (A).

[3] The thermoplastic polyester elastomer resin composition according to [1] or [2], wherein the epoxy compound (B) that is liquid at 23°C is a bifunctional epoxy compound.

[4] The thermoplastic polyester elastomer resin composition according to any one of [1] to [3], wherein a melt flow rate (in conformity with JIS K7210) of the thermoplastic polyester elastomer resin composition measured at 230°C under a load of 2.16 kg is 2 g/10 min or more.

[5] A molded article formed of the thermoplastic polyester elastomer resin composition according to any one of [1] to [4] .

Advantages of the Invention

The present invention can provide a thermoplastic polyester elastomer resin composition that achieves both flowability including excellent retention stability, and hydrolysis resistance, and has excellent mechanical characteristics.

Best Mode for Carrying Out the Invention

[Thermoplastic polyester elastomer (A)]

The thermoplastic polyester elastomer (A) is formed of a hard segment and a soft segment bonded to each other, wherein the hard segment is formed of a polyester containing, as constituent components, an aromatic dicarboxylic acid and an aliphatic and/or alicyclic diol, and wherein the soft segment is at least one member selected from an aliphatic polyether, an aliphatic polyester, or an aliphatic polycarbonate.

The thermoplastic polyester elastomer (A) preferably contains, as main constituent components, a hard segment that is formed of a crystalline polyester constituted from an aromatic dicarboxylic acid and an aliphatic or alicyclic diol, and a soft segment that is at least one member selected from the group consisting of an aliphatic polyether, an aliphatic polyester, and an aliphatic polycarbonate, and the content of the soft-segment component is preferably 95 to 5 mass%. The content of the soft-segment component is more preferably 90 to 10 mass%, furthermore preferably 85 to 15 mass%, particularly preferably 75 to 25 mass%, and most preferably 60 to 30 mass%. The thermoplastic polyester elastomer (A) may be a combination of two or more thermoplastic polyester elastomers, each of which has a soft-segment component at different content, so that the total of the content is adjusted to satisfy the content of the soft segment described above.

In the thermoplastic polyester elastomer (A), as to the aromatic dicarboxylic acid constituting the polyester of the hard segment, an ordinary aromatic dicarboxylic acid is widely used without any particular limitation, but terephthalic acid or a naphthalene dicarboxylic acid is desirable as a main aromatic dicarboxylic acid. The naphthalene dicarboxylic acid is preferably 2,6-naphthalene dicarboxylic acid among isomers of the naphthalene dicarboxylic acid. Examples of other acid component include: aromatic dicarboxylic acids such as a diphenyl dicarboxylic acid, isophthalic acid, and 5-sodium sulfoisophthalic acid; alicyclic dicarboxylic acids such as a cyclohexane dicarboxylic acid and tetrahydrophthalic anhydride; and aliphatic dicarboxylic acids such as succinic acid, glutaric acid, adipic acid, azelaic acid, sebacic acid, dodecanedioic acid, dimer acid, and hydrogenated dimer acid. These other acid components may be used in a content which does not greatly lower the melting point of the thermoplastic polyester elastomer (A) . The amount of the other acid component is preferably less than 35 mol% and more preferably less than 30 mol%.

In the thermoplastic polyester elastomer (A), as to the aliphatic or alicyclic diol constituting the polyester of the hard segment, a general aliphatic or alicyclic diol is widely used without any particular limitation, but an alkylene glycol having 2 to 8 carbon atoms is mainly desirable. Specific examples of the alkylene glycol include ethylene glycol, 1,3-propylene glycol, 1,4-butanediol, 1,6-hexanediol, and 1,4-cyclohexanedimethanol. Either 1,4-butanediol or 1,4-cyclohexanedimethanol is most preferable.

As to a component constituting the polyester of the hard segment, a butylene terephthalate unit (a unit formed of terephthalic acid and 1,4-butanediol) or a butylene naphthalate unit (a unit formed of 2,6-naphthalene dicarboxylic acid and 1,4-butanediol) is preferred in terms of physical properties, moldability, and cost performance.

The soft segment of the thermoplastic polyester elastomer (A) used in the present invention is at least one member selected from an aliphatic polyether, an aliphatic polyester, or an aliphatic polycarbonate.

Examples of the aliphatic polyether include poly(ethylene oxide)glycol, poly(propylene oxide)glycol, poly(tetramethylene oxide)glycol, poly(hexamethylene oxide)glycol, poly(trimethylene oxide)glycol, a copolymer of ethylene oxide and propylene oxide, an ethylene oxide adduct of poly(propylene oxide)glycol, and a copolymer of ethylene oxide and tetrahydrofuran. Among these examples, poly(tetramethylene oxide)glycol and an ethylene oxide adduct of poly(propylene oxide)glycol are preferred in terms of elastic characteristics.

Examples of the aliphatic polyester include poly(ε-caprolactone), polyenantholactone, polycaprylolactone, and polybutylene adipate. Among these examples, poly (ε-caprolactone) and polybutylene adipate are preferred in terms of elastic characteristics.

The aliphatic polycarbonate is preferably mainly formed of an aliphatic diol residue having 2 to 12 carbon atoms . Examples of this aliphatic diol include ethylene glycol, 1,3-propylene glycol, 1,4-butanediol, 1,5-pentanediol, 1,6-hexanediol, 1,8-octanediol, 2,2-dimethyl-1,3-propanediol, 3-methyl-1,5-pentanediol, 2,4-diethyl-1,5-pentanediol, 1,9-nonanediol, and 2-methyl-1,8-octanediol. Particularly, an aliphatic diol having 5 to 12 carbon atoms is preferred in terms of flexibility and low-temperature characteristics of the obtained thermoplastic polyester elastomer. These components may be used singly or in combination of two or more thereof as necessary on the basis of the case examples described below.

As to the aliphatic polycarbonate diol that constitutes the soft segment of the thermoplastic polyester elastomer (A) used in the present invention, and has good low-temperature characteristics, one having a low melting point (for example, 70°C or lower) and a low glass transition temperature is preferred. An aliphatic polycarbonate diol used to form a soft segment of a thermoplastic polyester elastomer and formed of 1, 6-hexanediol generally has a low glass transition temperature of around -60°C and a melting point of around 50°C, and therefore has good low-temperature characteristics. As to other example, an aliphatic polycarbonate diol obtained by copolymerizing the aliphatic polycarbonate diol described above with an appropriate amount of, for example, 3-methyl-1,5-pentanediol has a glass transition point slightly higher than the glass transition point of the original aliphatic polycarbonate diol, but has a lower melting point or is amorphous, and therefore corresponds to an aliphatic polycarbonate diol having good low-temperature characteristics. Also, an aliphatic polycarbonate diol formed of 1,9-nonanediol and 2-methyl-1,8-octanediol has a melting point of about 30°C and a glass transition temperature of around -70°C that are sufficiently low, and therefore corresponds to an aliphatic polycarbonate diol having good low-temperature characteristics.

The soft segment of the thermoplastic polyester elastomer (A) used in the present invention is preferably an aliphatic polyether from the viewpoint of solving the problem of the present invention.

The thermoplastic polyester elastomer (A) used in the present invention is preferably a copolymer containing, as main components, terephthalic acid, 1,4-butanediol, and poly(tetramethylene oxide) glycol. In the dicarboxylic acid component constituting the thermoplastic polyester elastomer (A), the content of the terephthalic acid is preferably 40 mol% or more, more preferably 70 mol% or more, furthermore preferably 80 mol% or more, and particularly preferably 90 mol% or more. In the glycol component constituting the thermoplastic polyester elastomer (A), the total of the 1,4-butanediol and the poly (tetramethylene oxide) glycol is preferably 40 mol% or more, more preferably 70 mol% or more, furthermore preferably 80 mol% or more, and particularly preferably 90 mol% or more.

The poly(tetramethylene oxide)glycol preferably has a number average molecular weight of 500 to 4000. The poly(tetramethylene oxide)glycol having a number average molecular weight of less than 500 sometimes makes it difficult for the thermoplastic polyester elastomer (A) to exert elastomer characteristics. On the other hand, the poly(tetramethylene oxide)glycol having a number average molecular weight of more than 4000 has lower compatibility with the hard-segment components, making it difficult to achieve block copolymerization. The number average molecular weight of the poly (tetramethylene oxide) glycol is more preferably 800 to 3000, and furthermore preferably 1000 to 2500.

The thermoplastic polyester elastomer (A) has a reduced viscosity of preferably 0.5 to 3.5 dl/g and more preferably 1.0 to 3.0 dl/g, from the viewpoint of making the present invention exhibit maximum effects.

The thermoplastic polyester elastomer (A) can be produced by a conventionally known method. It is possible to employ, for example, a method of subjecting a lower alcohol diester of a dicarboxylic acid, an excessive amount of a low-molecular-weight glycol, and a soft-segment component to a transesterification reaction in the presence of a catalyst, and subjecting the obtained reaction product to polycondensation, or a method of subjecting a dicarboxylic acid, an excessive amount of a glycol, and a soft-segment component to an esterification reaction in the presence of a catalyst, and subjecting the obtained reaction product to polycondensation.

[Epoxy compound (B)]

The epoxy compound (B) used in the present invention is a compound that is liquid at room temperature (23°C) . The epoxy compound (B) is a compound having an epoxy group that can be reacted with a terminal functional group of the thermoplastic polyester elastomer (A). The terminal functional group of the thermoplastic polyester elastomer (A) is a carboxyl group and/or a hydroxyl group. Hereinafter, the epoxy compound (B) is sometimes referred to as a liquid epoxy compound (B).

Examples of the epoxy compound include: aliphatic epoxy compounds such as ethylene glycol diglycidyl ether, polyethylene glycol diglycidyl ether, propylene glycol diglycidyl ether, polypropylene glycol diglycidyl ether, butanediol diglycidyl ether, neopentyl glycol diglycidyl ether, hexanediol diglycidyl ether, glycerin diglycidyl ether, trimethylolpropane triglycidyl ether, and diglycerin tetraglycidyl ether; alicyclic epoxy compounds such as dicyclopentadiene dioxide, epoxy cyclohexene carboxylic acid ethylene glycol diester, 3,4-epoxy cyclohexenylmethyl-3'-4'-epoxycyclohexenecarboxylate, and 1,2: 8,9-diepoxylimonene; aromatic epoxy compounds obtained by reacting, with epichlorohydrin, a polyphenol compound such as a glycidyl ether of hydroquinone, resorcinol, bisphenol A, bisphenol F, 4,4'-dihydroxybiphenyl, tetrabromobisphenol A, 2,2-bis(4-hydroxyphenyl)-1,1,1,3,3,3-hexafluoropropane, or 1,6-dihydroxynaphthalene, and hydrogenated compounds of the aromatic epoxy compounds; aromatic or heterocyclic epoxy compounds such as phthalic acid diglycidyl ester and triglycidyl isocyanurate; and compounds containing silicone oil having an epoxy group at an end, and compounds containing an alkoxysilane and an epoxy group.

The liquid epoxy compound (B) means, among these epoxy compounds, a compound that stays not solid but liquid in a 23°C atmosphere.

The liquid epoxy compound (B) is preferably a bifunctional epoxy compound from the viewpoint of the presence or absence of a chain extension reaction and the control of a reaction. A monofunctional epoxy compound has a smaller chain extension action, and a tri- or more functional epoxy compound sometimes has difficulty in controlling a reaction and retaining the flowability.

The liquid epoxy compound (B) is preferably particularly a bisphenol F diepoxy compound having an epoxy equivalent of 3000 to 10000 eq/t (epoxy value of 100 to 333 g/eq). Since the bisphenol F diepoxy compound has a lower viscosity compared with the viscosity of other epoxy compounds, by setting the amount of epoxy present unreacted in the thermoplastic polyester elastomer resin composition to a specific range while allowing the generation of the chain extension action, it is possible to realize a noticeable improvement of the hydrolysis resistance while retaining the flowability and the mechanical strength. The mechanism of exertion of the flowability by the liquid epoxy compound (B) is that when the content of the terminal acid group of the thermoplastic polyester elastomer (A) remains high, the chain extension effect is exhibited by a reaction between the two compounds, and as the terminal acid group of the thermoplastic polyester elastomer (A) is gradually blocked, unreacted portions of the liquid epoxy compound remain more in the resin composition. In this state, the liquid epoxy compound in the resin composition is considered to, due to the plasticizing effect of the liquid epoxy compound, exert the flowability.

Surprisingly, when the flowability is exerted by addition of a general plasticizer that is not reactive with the thermoplastic polyester elastomer (A), the polyester elastomer resin composition tends to decrease the mechanical-physical properties, whereas when the flowability is imparted by the liquid epoxy compound (B) that is reactive, the mechanical-physical properties are not decreased. This effect of the present invention is presumed to be due to the reaction progressed by the liquid epoxy compound (B) when polymer chains of the thermoplastic polyester elastomer (A) are broken in melting or due to the composition having the epoxy compound (B) incorporated therein.

When the liquid epoxy compound (B) is added to the thermoplastic polyester elastomer (A), the content ratio of the liquid epoxy compound (B) is preferably 0.5 to 6 parts, more preferably 0.7 to 5 parts, furthermore preferably 0.8 to 4 parts, and particularly preferably 1.5 to 3.5 parts by mass relative to 100 parts by mass of the thermoplastic polyester elastomer (A). When the content ratio of the liquid epoxy compound (B) is less than 0.5 parts by mass, the amount of residual portions of the epoxy compound is small, sometimes leading to insufficient exertion of the flowability. When the liquid epoxy compound (B) is added in an amount of more than 6 parts by mass, the plasticizing effect remarkably works, sometimes causing, for example, a decrease of the mechanical-physical properties.

The thermoplastic polyester elastomer resin composition according to the present invention contains a reaction product obtained through a reaction between the thermoplastic polyester elastomer (A) and the liquid epoxy compound (B), but may also contain a portion of the thermoplastic polyester elastomer (A) that has not been reacted with the liquid epoxy compound (B) and a free portion of the liquid epoxy compound (B). This is because it is difficult to completely react the thermoplastic polyester elastomer (A) with the liquid epoxy compound (B). The content relationship described above between the thermoplastic polyester elastomer (A) and the liquid epoxy compound (B) is, in the thermoplastic polyester elastomer resin composition, considered on the basis of the mass derived from the liquid epoxy compound (B) relative to the mass derived from the thermoplastic polyester elastomer (A). The point of the present invention is selecting the liquid epoxy compound (B) described above, employing a producing method described later, and intentionally leaving an unreacted epoxy group in the thermoplastic polyester elastomer resin composition.

Addition of a catalyst, which is not essential for achievement of the present invention, is efficient for the purpose of promoting the reaction between the liquid epoxy compound (B) and the thermoplastic polyester elastomer (A). As to the catalyst, any of tertiary amines, imidazoles, and phosphorus compounds that are commercially available as a curing promotor for an epoxy compound can be blended.

[Other additives]

The thermoplastic polyester elastomer resin composition according to the present invention may, as necessary, have blended therein a general-purpose antioxidant such as an aromatic amine-based antioxidant, a hindered phenol-based antioxidant, a phosphorus-based antioxidant, and a sulfur-based antioxidant.

Further, when the thermoplastic polyester elastomer resin composition according to the present invention is required to have weather resistance, it is preferred to add an ultraviolet absorber and/or a hindered amine-based compound. For example, a benzophenone-based, benzotriazole-based, triazole-based, nickel-based, or salicylic photostabilizer can be used. Specific examples of the photostabilizer include 2,2'-dihydroxy-4-methoxybenzophenone, 2-hydroxy-4-n-octoxybenzophenone, p-t-butylphenylsalicylate, 2,4-di-t-butylphenyl-3,5-di-t-butyl-4-hydroxybenzoate, 2-(2'-hydroxy-5'-methylphenyl)benzotriazole, 2-(2'-hydroxy-3',5'-di-t-amyl-phenyl)benzotriazole, 2-[2'-hydroxy-3', 5'-bis($\alpha,\alpha$-dimethylbenzylphenyl)benzotriazole, 2-(2'-hydroxy-3'-t-butyl-5'-methylphenyl)-5-chlorobenzotria zole, 2-(2'-hydroxy-3',5'-di-t-butylphenyl)-5-chlorobenzotriazole, 2,5-bis-[5'-t-butylbenzoxazolyl-(2)]-thiophene, bis(3,5-di-t-butyl-4-hydroxybenzyl phosphoric acid monoethyl ester)nickel salt, a mixture of 85 to 90% of 2-ethoxy-5-t-butyl-2'-ethyloxalic acid-bis-anilide and 10 to 15% of 2-ethoxy-5-t-butyl-2'-ethyl-4'-t-butyloxalic acid-bis-anilide, 2-[2-hydroxy-3,5-bis($\alpha,\alpha$-dimethylbenzyl)phenyl]-2H-benzotri azole, 2-ethoxy-2'-ethyloxalic acid bisanilide, 2-[2'-hydroxy-5'-methyl-3'-(3'',4'',5'',6''-tetrahydrophtha limide-methyl)phenyl]benzotriazole, bis(5-benzoyl-4-hydroxy-2-methoxyphenyl)methane, 2-(2'-hydroxy-5'-t-octylphenyl)benzotriazole, 2-hydroxy-4-i-octoxybenzophenone, 2-hydroxy-4-dodecyloxybenzophenone, 2-hydroxy-4-octadecyloxybenzophenone, and phenyl salicylate. The content of the photostabilizer is preferably 0.1 mass% or more and 5 mass% or less on the basis of the mass of the thermoplastic polyester elastomer resin composition.

The thermoplastic polyester elastomer resin composition according to the present invention can have other various additives blended therein. As to the additives, a resin other than the thermoplastic polyester elastomer (A), an inorganic filler, a stabilizer, and an anti-aging agent can be added in a content which does not impair the features of the present invention. In addition, as to other additive, a coloring pigment, an inorganic or organic filler, a coupling agent, a tackifier, a quencher, a stabilizer such as a metal deactivator, a flame retardant, or the like can also be added. In the thermoplastic polyester elastomer resin composition according to the present invention, the total of the thermoplastic polyester elastomer (A) and the liquid epoxy compound (B) accounts for preferably 80 mass% or more, more preferably 90 mass% or more, and furthermore preferably 95 mass% or more.

The thermoplastic polyester elastomer resin composition according to the present invention has an acid value of 25 eq/t or less, preferably 20 eq/t or less, more preferably 15 eq/t or less, and furthermore preferably 10 eq/t or less. The lower limit of the acid value is 0 eq/t. More improvement of the hydrolysis resistance can be expected as the acid value is smaller. The acid value can be measured by the method described in the section of Examples described later.

The thermoplastic polyester elastomer resin composition according to the present invention has an epoxy value of 10 eq/t or more, preferably 20 eq/t or more, more preferably 30 eq/t or more, and furthermore preferably 45 eq/t or more. The upper limit of the epoxy value is about 130 eq/t. With the epoxy value falling within this range, the liquid epoxy compound (B) works as a plasticizer in melt molding and the thermoplastic polyester elastomer resin composition exerts the flowability. The epoxy value can be measured by the method described in the section of Examples described later.

In the thermoplastic polyester elastomer resin composition according to the present invention, the epoxy value is greater than the acid value. When the epoxy value is smaller than the acid value, the liquid epoxy compound (B) is reacted with acid ends of the thermoplastic polyester elastomer (A), and thus cannot exert the plasticizing effect. However, by setting the epoxy value greater than the acid value, an unreacted portion of the liquid epoxy compound (B) can exert the plasticizing effect for the thermoplastic polyester elastomer (A), and therefore the thermoplastic polyester elastomer resin composition can be obtained that achieves both flowability including excellent retention stability, and hydrolysis resistance, and has excellent mechanical characteristics. The difference between the epoxy value and the acid value is not particularly limited, but is preferably 5 eq/t or more, more preferably 20 eq/t or more, and furthermore preferably 40 eq/t or more.

The thermoplastic polyester elastomer resin composition according to the present invention has a melt flow rate (in conformity with JIS K7210) at 230°C under a load of 2.16 kg of preferably 2 g/10 min or more, and more preferably 3 g/10 min or more. The melt flow rate is preferably 15 g/10 min or less, and more preferably 10 g/10 min or less.

Examples of a method of producing the thermoplastic polyester elastomer resin composition according to the present invention include a method of performing melt kneading, using a single- or twin-screw melt kneader, or a normal mixer for a thermoplastic resin, represented by a kneading heater, and subsequently performing pelletization by a pelletizing step. In the melt kneading, it is not preferred to mix the thermoplastic polyester elastomer (A) with the liquid epoxy compound (B) before the melt kneading. Advance mixing gives an extra thermal history to the liquid epoxy compound (B), which cause thermal degradation of the liquid epoxy compound (B), a reaction of portions of the liquid epoxy compound (B), and a reaction more than necessary between the thermoplastic polyester elastomer (A) and the liquid epoxy compound (B), and thus the prescribed acid value and epoxy value cannot be achieved. Therefore, it is preferred to blend the liquid epoxy compound (B) after melting the thermoplastic polyester elastomer (A). For example, in the case of a twin-screw melt kneader, preferred is a method of charging the thermoplastic polyester elastomer (A), and then charging the liquid epoxy compound (B) from a different charging port.

The thermoplastic polyester elastomer resin composition according to the present invention can be formed into a molded article by a known molding method. The molding method is not limited, and examples thereof include injection molding, blow molding, extrusion molding, foammolding, profile molding, calendar molding, and other various molding methods. Injection molding is especially preferred.

Examples

In order to illustrate the present invention in detail, Examples will be shown below although the present invention shall not be limited at all by those Examples. Incidentally, each of the measured values mentioned in Examples was measured by the following methods.

[Thermoplastic polyester elastomer (A)]

A thermoplastic polyester elastomer (A-1) in which the content of a soft-segment component is 40.9 mass% was synthesized using, as raw materials, dimethyl terephthalate, 1,4-butanediol, and poly(tetramethylene oxide)glycol having a number average molecular weight of 1000.

A thermoplastic polyester elastomer (A-2) in which the content of a soft-segment component is 47.1 mass% was synthesized using, as raw materials, dimethyl terephthalate, 1,4-butanediol, and poly(tetramethylene oxide)glycol having a number average molecular weight of 1500.

[Epoxy compound (B)]

(B-1) Bisphenol F diepoxy compound that is liquid at 23°C, viscosity: 3500 mPa·s, epoxy value: 165 to 177 g/eq
(B-2) Polyethylene glycol diglycidyl ether that is liquid at 23°C, viscosity: 20 mPa·s, epoxy value: 122 g/eq
(B-3) Bisphenol F diepoxy compound that is solid at 23°C, epoxy value: 950 to 1200 g/eq

[Catalyst]

Phosphorus compound: triphenyl phosphine

Examples and Comparative Examples

Only the thermoplastic polyester elastomer (A-1) or (A-2) was kneaded and pelletized by a twin-screw extruder. Also, the thermoplastic polyester elastomer (A-1) or (A-2) and the epoxy compound (B-1), (B-2), or (B-3) were kneaded and pelletized by a twin-screw extruder. The blending ratio of the epoxy compound was the ratio described in Table 1, which is expressed relative to 100 parts by mass of the thermoplastic polyester elastomer. As to methods for charging the epoxy compound (B), a method of charging the thermoplastic polyester elastomer (A) into the twin-screw extruder and then charging the epoxy compound (B) through a side feeder was indicated as "A", and a method of dry-blending the thermoplastic polyester elastomer (A) and the epoxy compound (B) and then charging the mixture into the twin-screw extruder was indicated as "B". The temperature of the cylinder during kneading was set to 240°C. The pellets of the obtained thermoplastic polyester elastomer (resin composition) were evaluated as follows. Table 1 shows the results.

[Acid value]

The acid value (eq/t) of the thermoplastic polyester elastomer (resin composition) was determined by a dissolution-titration method in which a sample (200 mg) having sufficiently been dried to have a moisture percentage of 0.1 mass% or less was dissolved in hot benzyl alcohol (10 mL) so as to give a solution, and the obtained solution was cooled, then had added thereto chloroform (10 mL) and phenol red, and was titrated with a 1/25-normality alcoholic potash solution (ethanol solution of KOH).

[Epoxy value]

Quantitative determination of the epoxy value was performed by $^1$H-NMR measurement at a resonance frequency of 600 MHz. The measurement was performed as follows using, as a measuring device, NMR (nuclear magnetic resonator) AVANCE-NEO600 manufactured by Bruker Corporation.

A sample (20 mg) was dissolved in a solvent (chloroform-d/1,1,1,3,3,3-hexafluoro-isopropanol-d = 9/1 volume ratio) so as to give a solution, and then the obtained solution was charged into a NMR tube and measured. As to a lock solvent, chloroform-d was used, and the waiting time was set to 1 second, the data acquisition time was set to 4 seconds, and the cumulative number was set to 128 times. After the measurement, the epoxy value was calculated from a ratio between an epoxy-derived peak intensity detected at 2.8 ppm and a peak intensity derived from the thermoplastic polyester elastomer. In the case of the thermoplastic polyester elastomer (A-1), the peak intensities detected at 8.1 ppm, 2.0 ppm, and 1.6 ppm respectively derived from terephthalic acid, 1,4-butanediol, and poly(tetramethylene oxide)glycol in the thermoplastic polyester elastomer were used as the peak intensity derived from the thermoplastic polyester elastomer.

[MFR]

In conformity with the test method described in JIS K7210, the melt flow rate (MFR: referred to as an initial MFR) at 230°C under a load of 2.16 kg was measured. A sample having sufficiently been dried to have a moisture percentage of 0.1 mass% or less was used. After the resin (composition), which had been melted, was retained in the device for 20 minutes, the MFR was then measured by the same method and ΔMFR was determined by the following equation. The ΔMFR is an index of retention stability and is preferably -1.0 to 1.0 g/10 min and more preferably -0.7 to 0.7 g/10 min.

$$\Delta MFR = (MFR\ after\ retention) - (initial\ MFR)$$

[Comprehensive flowability]

The comprehensive flowability was evaluated by the following criteria.

o: The MFR (initial MFR) is 2 g/10 min or more and the ΔMFR is -0.7 to 0.7 g/10 min.
Δ: The MFR (initial MFR) is 2 g/10 min or more and the ΔMFR is -1.0 to 1.0 g/10 min (except for the case of o).
×: The MFR (initial MFR) is less than 2 g/10 min, or the MFR (initial MFR) is 2 g/10 min or more but the ΔMFR is outside the range of -1.0 to 1.0 g/10 min.

[Tensile rupture strength]

Using an injection molder, the resin (composition) was, with the temperature set to 230°C, molded into a 2-mm-thick × 100 mm × 100 mm flat plate, and then punched orthogonally to the flat plate into a test piece in the shape of dumbbell No. 3. Using TENSILON, the obtained test piece was stretched at a rate of 500 mm/min, and the stress at which the test piece was ruptured was defined as a tensile rupture strength (MPa).

[Hydrolysis resistance]

Using an injection molder, the resin (composition) was, with the temperature set to 230°C, molded into a 2-mm-thick × 100 mm × 100 mm flat plate, and then punched orthogonally to the flat plate into a test piece in the shape of dumbbell No. 3. The obtained test piece was immersed in 100°C boiling water, and the time taken for the tensile elongation retention rate to become 50% of the initial tensile elongation was observed and used as an index of hydrolysis resistance.
When the time for the tensile elongation retention rate to become 50% was less than 1000 hours, the hydrolysis resistance was indicated as ×, and when the time was 1000 hours or more, the hydrolysis resistance was indicated as o.

[Table 1]

| | | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|
| Composition | Thermoplastic polyester elastomer (A-1) | parts by mass | 100 | 100 | 100 | 100 | | 100 | 100 | | 100 | 100 | 100 |
| | Thermoplastic polyester elastomer (A-2) | parts by mass | | | | | 100 | | | 100 | | | |
| | Catalyst | parts by mass | 0.2 | 0.2 | 0.2 | 0.2 | 0.2 | 0.2 | | | 0.2 | 0.2 | 0.2 |
| | Epoxy compound (B-1) | parts by mass | 1 | 2 | 2.5 | 3 | 2 | | | | 0.5 | | 1 |
| | Epoxy compound (B-2) | parts by mass | | | | | | 2 | | | | | |
| | Epoxy compound (B-3) | parts by mass | | | | | | | | | | 7 | |
| | Method for charging epoxy compound (B) | — | A | A | A | A | A | A | - | - | A | B | B |
| Property | Epoxy value | eq/ton | 24 | 53 | 81 | 104 | 59 | 77 | 0 | 0 | 11 | 14 | 14 |
| | Acid value | eq/ton | 18 | 8 | 1 | 0 | 3 | 5 | 48 | 37 | 35 | 21 | 14 |
| | MFR | g/10 min | 2.8 | 4.1 | 5.5 | 8.5 | 8.4 | 8.0 | 21.2 | 14.5 | 11.7 | 0.7 | 1.8 |
| | ΔMFR | g/10 min | 0.9 | 0.4 | 0.2 | 0.3 | 0.5 | -0.5 | 3.6 | 3.2 | 1.7 | 0.01 | 1.0 |
| Evaluation | Comprehensive flowability | — | Δ | O | O | O | O | O | × | × | × | × | × |
| | Tensile rupture strength | MPa | 41 | 45 | 44 | 43 | 33 | 42 | 34 | 28 | 38 | 37 | 41 |
| | Hydrolysis resistance | — | O | O | O | O | O | O | × | × | × | O | O |

As is clear from Table 1, the thermoplastic polyester elastomer resin compositions according to the examples achieve both excellent flowability and hydrolysis resistance, and have excellent mechanical characteristics. Particularly, Examples 2 to 6 in which the difference between the epoxy value and the acid value is 20 eq/t or more have further excellent comprehensive flowability.

Industrial Applicability

As described above, the thermoplastic polyester elastomer resin composition according to the present invention achieves both excellent flowability and hydrolysis resistance, and has excellent mechanical characteristics, and are therefore suitable for various products from industrial products such as a vehicle component and electric equipment to livingwares such as a film or sheet, and a bottle or container. Particularly, the thermoplastic polyester elastomer resin composition according to the present invention can be applied to a wide range of uses such as a thin or large member that is susceptible to the influence of moisture and required to have flowability.

**Claims**

1. A thermoplastic polyester elastomer resin composition obtained through a reaction between a thermoplastic polyester elastomer (A) and an epoxy compound (B) that is liquid at 23°C, wherein the thermoplastic polyester elastomer resin composition has an acid value of 25 eq/ton or less and an epoxy value of 10 eq/ton or more, and wherein the epoxy value is greater than the acid value.

2. The thermoplastic polyester elastomer resin composition according to claim 1, wherein in the thermoplastic polyester elastomer resin composition, a part derived from the epoxy compound (B) that is liquid at 23°C is 0.5 to 6 parts by mass relative to 100 parts by mass of a part derived from the thermoplastic polyester elastomer (A).

3. The thermoplastic polyester elastomer resin composition according to claim 1 or 2, wherein the epoxy compound (B) that is liquid at 23°C is a bifunctional epoxy compound.

4. The thermoplastic polyester elastomer resin composition according to claim 1 or 2, wherein a melt flow rate (in conformity with JIS K7210) of the thermoplastic polyester elastomer resin composition measured at 230°C under a load of 2.16 kg is 2 g/10 min or more.

5. A molded article formed of the thermoplastic polyester elastomer resin composition according to claim 1 or 2.

## INTERNATIONAL SEARCH REPORT

| International application No. |
| --- |
| **PCT/JP2023/006798** |

### A. CLASSIFICATION OF SUBJECT MATTER

**C08L 67/00**(2006.01)i; **C08G 59/20**(2006.01)i
FI:  C08L67/00; C08G59/20

According to International Patent Classification (IPC) or to both national classification and IPC

### B. FIELDS SEARCHED

Minimum documentation searched (classification system followed by classification symbols)

C08L67/00; C08G59/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2011-94000 A (TOYO BOSEKI) 12 May 2011 (2011-05-12)<br>claims, paragraph [0064], examples | 1-5 |
| X | WO 2021/172348 A1 (TOYOBO CO., LTD.) 02 September 2021 (2021-09-02)<br>claims, examples | 1-5 |
| A | JP 2021-147551 A (CEMEDINE CO LTD) 27 September 2021 (2021-09-27)<br>paragraph [0082] | 1-5 |
| A | JP 2020-12040 A (TOYOBO CO., LTD.) 23 January 2020 (2020-01-23)<br>entire text | 1-5 |
| A | WO 2018/174129 A1 (TOYOBO CO., LTD.) 27 September 2018 (2018-09-27)<br>entire text | 1-5 |
| A | JP 2021-105161 A (DU PONT TORAY CO LTD) 26 July 2021 (2021-07-26)<br>entire text | 1-5 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 May 2023** | **23 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| Patent document cited in search report | | | Publication date (day/month/year) | Patent family member(s) | Publication date (day/month/year) |
|---|---|---|---|---|---|
| JP | 2011-94000 | A | 12 May 2011 | (Family: none) | |
| WO | 2021/172348 | A1 | 02 September 2021 | CN        115135720        A | |
| JP | 2021-147551 | A | 27 September 2021 | (Family: none) | |
| JP | 2020-12040 | A | 23 January 2020 | (Family: none) | |
| WO | 2018/174129 | A1 | 27 September 2018 | (Family: none) | |
| JP | 2021-105161 | A | 26 July 2021 | (Family: none) | |

International application No.

**PCT/JP2023/006798**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000143950 A

- JP 3693152 B